# EUROPÄISCHE PATENTSCHRIFT

(11) **EP 1 915 228 B1**
(45) Veröffentlichungstag und Bekanntmachung des Hinweises auf die Patenterteilung: **15.10.2008**
(21) Anmeldenummer: 06776878.8
(22) Anmeldetag: 16.08.2006
(51) Int. Cl.: B23B 31/117

(54) **SPANNEINRICHTUNG FÜR EINE VORRICHTUNG ZUM BEARBEITEN VON WERKSTÜCKEN**
CLAMPING DEVICE FOR A DEVICE FOR MACHINING WORKPIECES
DISPOSITIF DE SERRAGE POUR INSTALLATION D'USINAGE DE PIÈCES

(30) Priorität: 17.08.2005 DE 102005039174
(43) Veröffentlichungstag der Anmeldung: 30.04.2008
(73) Patentinhaber: LeGuin, Hermann, D-88279 Amtzell (DE)
(72) Erfinder: LeGuin, Hermann, D-88279 Amtzell (DE)
(74) Vertreter: Weiss, Peter
(86) Internationale Anmeldenummer: PCT/EP2006/008072
(87) Internationale Veröffentlichungsnummer: WO 2007/020066

(56) Entgegenhaltungen:
- EP-A- 1 733 828
- WO-A-02/26429
- DE-A1- 2 252 275
- DE-A1- 19 800 424
- DE-C- 869 892
- DE-C1- 19 521 755
- JP-A- 60 221 206
- US-A- 2 707 108

## Beschreibung

Die Erfindung betrifft eine Vorrichtung zum Bearbeiten von Werkstücken mit einem Werkzeug, gemäß dem Oberbegriff des Anspruchs 1. Eine solche Vorrichtung ist aus der DE-C-869 892 bekannt.

### Stand der Technik

Derartige Vorrichtungen sind in Vielfältiger Form und Ausführung bekannt und auf dem Markt. Sie dienen vor allem zum Bearbeiten von Werkstücken innerhalb von Bearbeitungsstationen, wie beispielsweise Drehbänken, Fräsmaschinen od. dgl.

Aus der DE 198 00 424 A1 ist eine Vorrichtung der o. g. Art bekannt, bei der das Werkzeug mit einem Schaft in eine Bohrung in dem Halter eingestzt und durch eine Spanneinrichtung gehalten ist. Das Werkzeug endet mit eines Stirnfläche in der Bohrung, welche abgeschrägt ist und mit einem Queranschlag zusammenwirkt. Der Queranschlag durchsetzt die Bohrung in dem Halter radial, wobei das Werkzeug in diese Bohrung eingesetzt und durch die in axialer Richtung wirkende Spanneinrichtung in seiner Axial- sowie Radialposition festgelegt ist.

Als nachteilig bei dieser Vorrichtung hat sich herausgestellt, dass die Halterung des Werkzeuges in seiner Radialposition oft nicht ausreichend ist.

Aus der DE 22 52 275 A1 ist eine Vorrichtung zum Festhalten von Bohrspiralen in einem Bohrfutter bekannt. Dabei ist zwischen Bohrspirale und Bohrfutter eine Kupplungshülseneinheit angeordnet, in die ein Sägeschnitt rechtwinklig zur Längsachse eingebracht ist. Damit wird die Kupplungshülseneinheit in einen antreibenden und einen klemmenden Abschnitt geteilt. Beide Hülsenteile lassen sich durch Anziehen einer Überwurfmutter nicht mehr spaltlos aneinanderfügen, weil die formschlüssig au der Bohrspirale anliegenden Kupplungshülsenteilen wegen ihrer drehhemmenden Axialnutführung nicht mehr in Spiralnutrichtung der Bohrspirale aneinanderschraubbar sind. Beim Anziehen der Überwurfmutter drückt sich deshalb der untere Kupplungshülsenteil auf die Hinterschliffflächen der Bohrspirale und klemmt diese fest im Bohrfutter ein.

In oder DE 869 892 C wird eine Spannvorrichtung beschrieben, die nach dem Thermosflaschenprinzip arbeitet. Durch eine Überwurfmutter wird ein elastisches Element, welches sich, zwischen Spanndorn und Werkstück befindet, axial so verformt, dass es sich radial aufspreizt, wodurch ein Verkeilen stattfindet.

### Aufgabe

Aufgabe der vorliegenden Erfindung ist es, die radiale Festlegung des Werkzeuges in einem Halter zu verbessern.

### Lösung der Aufgabe

Zur Lösung der Aufgabe führt, dass die Hülse unrund ist und das Werkzeug aufnimmt oder in eine Ausnehmung in dem Werkzeug eingreift, wobei der Hülse ein Drehelement mit einher Innen- bzw. Aussenkontur ähnlich einer unrunden Aussen- bzw. Innenkontur der Hülse auf die Hülse aufgesetzt bzw. in die Hülse eingesetzt und gedreht wird, wobei die Hülse beim Verdrehen des Drehelementes so verformt wird, dass das Werkzeug in Radialrichtung festgelegt wird.

Der Vorteil dieser unrunden, deformierbaren Hülse ist es, dass sie durch das geeignete Drehelement so verformt werden kann, dass sie das aufgenommene werkzeug fest verspannt, sodass eine Radialbewegung des Werkzeuges unmöglich wird. Das gleiche gilt natürlich auch, wenn nicht die Hülse das Werkzeug aufnimmt, sondern die Hülse in einer Ausnehmung in dem Werkzeug sitzt. Auch hier wird die :Hülse durch Deformierung in der Ausnehmung in dem Werkzeug verkeilt.

Bevorzugt besteht die Hülse aus Metall, wobei selbstverständlich die Wandstärke der Hülse nicht allzu dick ist, sodass eine Deformation zugelassen wird Ferner kann die Hülse direkt dem Halter angeformt werden, d. h., sie kann einstückig mit dem Halter hergestellt oder aber separat hergestellt und später durch geeignete Verbindungsmassnahmen mit dem Halter verbunden werden.

In einem bevorzugtem Ausführungsbeispiel ist die Hülse querschnittlich mehreckig ausgestaltet, wobei der Begriff mehreckig übertrieben erscheint. Beispielsweise kann die Hülse dreieckig ausgebildet sein, wobei die Eckbereiche allerdings sehr stark abgerundet sind, sodass die eckige Ausbildung mit dem blossen Auge kaum sichtbar ist. In dem Ausführungsbeispiel, bei dem das Werkzeug die Hülse durchsetzt, wird der Hülse ein Drehelement aufgesetzt, welches eine Aufnahme mit einer Innenkontur aufweist, die der Aussenkontur der Hülse in etwa entspricht. Das bedeutet, dass das Drehelement grundsätzlich nur in bestimmten Drehpositionen auf die Hülse aufgesetzt werden kann. Wird dann das Drehelement gedreht, laufen seine "Eckbereiche" der Innenkontur auf die "Eckbereiche" der Aussenkontur auf, wobei andere Bereiche der Hülse so deformiert werden, dass sie an das Werkstück angepresst werden.

In dem anderen Ausführungsbeispiel sitzt die Hülse in einer Ausnehmung in dem Werkzeug. Bei dem Werkzeug kann es sich hierbei beispielsweise um einen Fräser oder auch um ein Sägeblatt handeln. Dabei ist die Ausnehmung des Werkzeuges selbst rund ausgestaltet. Wird nun ein Drehelement mit einer Aussenkontur ähnlich der unrunden Innenkontur der Hülse in die Hülse eingesetzt und gedreht, so geschieht wiederum eine Deformation der Hülse, wobei Hülsenbereiche gegen die Ausnehmung des Werkzeuges gedrückt werden.

Durch diese erfindungsgemässe Ausgestaltung entsteht eine sehr günstige Einspannung des Werkzeuges, sodass ein radiales Auslenken vermieden wird. Wird nun noch das freie Ende des Werkzeuges in dem erstgenannten Ausführungsbeispiel abgeschrägt und trifft in der Axialbohrung eines Halters auf einen Querriegel, wie dies in der DE 198 00 424 A1 beschrieben ist, so erfolgt sowohl eine axiale als auch eine extrem sichere radiale Festlegung des Werkzeuges bei gleichzeitiger Unterbindung jeglicher Drehbewegung des Werkzeuges gegenüber dem Halter. Eine derartige Festlegung ist extrem wiederholgenau.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine teilweise gebrochen dargestellte Seitenansicht einer erfindungsgemässen Vorrichtung zum Bearbeiten von Werkstücken;
Figur 2 einen Querschnitt durch die Vorrichtung gemäss Figur 1 entlang Linie II - II; und
Figur 3 einen Querschnitt durch ein weiteres Ausführungsbeispiel der Erfindung.

Eine erfindungsgemässe Vorrichtung zum Bearbeiten von nicht näher gezeigten Werkstücken weist einen Halter 1 auf, der eine gestrichelt angedeutete Axialbohrung 2 besitzt. In diese Axialbohrung 2 ist ein Werkzeug 3 eingesetzt, wobei ein Ende dieses Werkzeuges 3 in der Axialbohrung 2 mit einer Schräge 4 versehen ist. Diese Schräge 4 wirkt mit einer Verdrehsicherung, hier ein Queranschlag 5 zusammen, wie er in der DE 198 00 424 A1 näher beschrieben ist.

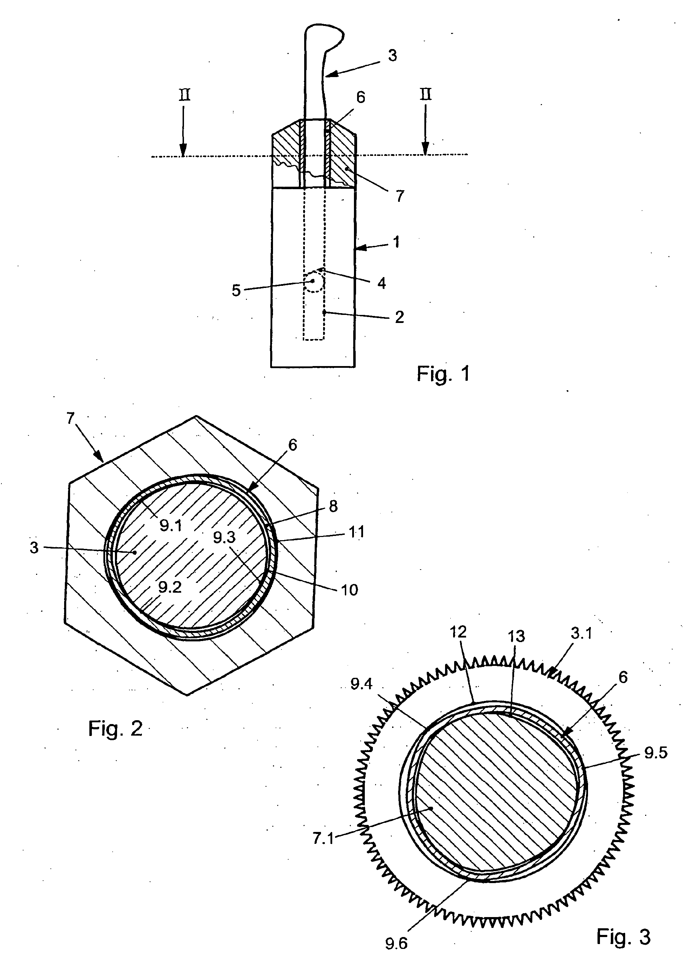

Bevor das Werkzeug 3 in die Axialbohrung 2 eintritt, durchfährt es eine Hülse 6, die von einem Drehelement 7 umfasst ist. Das Drehelement 7 ist gemäss Figur 2 als Sechskant ausgebildet.

Erfindungswesentlich und in Figur 2 angedeutet ist, dass die Hülse 6 einen Mantel 8 aufweist, der unrund ausgebildet ist. Er liegt in diesem Ausführungsbeispiel an drei Stellen 9.1, 9.2 und 9.3 dem zylinderförmigen Werkzeug 3 an, während seine Innenfläche 10 in dem dazwischen liegenden Bereich einen ansteigenden bzw. abfallenden Abstand von sehr geringem Ausmass (beispielsweise 3/100 mm) zu dem Werkzeug 3 einhält.

Das Drehelement 7 bildet eine Aufnahme 11 für die Hülse 6 aus, wobei eine Innenkontur dieser Aufnahme 11 der unrunden Aussenkontur der Hülse 6 nachgeformt ist.

### Die Funktionsweise der vorliegenden Erfindung ist folgende:

Das Werkzeug 3 wird in die Hülse 6 eingesetzt, wobei das Werkzeug 3, da es zylindrisch ausgebildet ist, in der Hülse 6 frei drehen kann. Es liegt lediglich an den Stellen 9.1 bis 9.3 der Innenkontur der Hülse 6 an. Auf diese Art und Weise ist es möglich, dass nach dem Einsetzen des Werkzeuges 3 dieses auch in der Axialbohrung 2 gedreht werden kann, sodass die Schräge 4 mit dem Queranschlag 5 in Position gebracht werden kann.

Nunmehr wird das Drehelement 7 auf die Hülse 6 aufgesetzt, was nur in drei Positionen geschehen kann, da die Innenkontur der Aufnahme 11 des Drehelementes 7 der Aussenkontur der Hülse 6, die unrund ist, nachgebildet wurde.

Nunmehr wird das Drehelement 7 mit einem entsprechenden Schlüssel gedreht, wobei die abgerundeten Eckbereiche der Innenkontur der Aufnahme 11 des Drehelementes 7 auf den entsprechenden stark abgerundete Ecken des Aussenmantels der Hülse 6 auflaufen und auf die Hülse 6 eine Keilwirkung ausüben, die bewirkt, dass die Hülse 6 an zumindest drei Stellen 9.1 bis 9.3 fest an das Werkzeug 3 angedrückt wird, sodass eine radiale Bewegung des Werkzeuges 3 unmöglich wird. Da die zusammenwirkenden Keilflächen von Drehelement 7 und Hülse 6 eine sehr geringe Steigung gegeneinander aufweisen, entsteht zwischen Drehelement 7 und Hülse 6 eine Selbsthemmung, die nur durch ein Werkzeug, welches das Drehelement 7 in entgegengesetzte Drehrichtung versetzt, aufgehoben werden kann.

Die Figur 3 soll die umgedrehte Anordnung einer Werkzeughalterung andeuten. Auch hier ist der Halter 1 mit der aufgesetzten Hülse 6 versehen. Diese Hülse 6 ist, wie in dem anderen Ausführungsbeispiel, ebenfalls unrund, beispielsweise übertrieben gesagt dreieckig bzw. polygon. Ein Werkzeug 3.1 ist hier jedoch nicht in die Hülse 6 eingesetzt, sondern besitzt eine Ausnehmung 12, die kreisrund sind. Da die Aussenkontur der Hülse 6 ebenfalls unrund ist, liegt sie ebenfalls an drei Stellen 9.4, 9.5 und 9.6 der Innenfläche der Ausnehmung 12 an.

Zum Verspannen wird nun ein Drehelement 7.1 in die Hülse 6 eingesetzt, wobei dieses Drehelement 7.1 wiederum unrund ausgebildet ist. Bevorzugt weist es eine Aussenkontur 13 auf, welche der Innenkontur der Hülse 6 entspricht. Beim Drehen des Drehelementes 7.1 erfolgt wiederum ein Deformieren der Hülse 6, was bewirkt, dass sich bestimmte Stellen der Aussenkontur der Hülse 6 gegen die Innenkontur der Ausnehmung 12 pressen und so das Werkzeug 3.1 auf der Hülse 6 verkeilt wird.

### Bezugszeichenliste

| | | | | | |
|---|---|---|---|---|---|
| 1 | Halter | 34 | | 67 | |
| 2 | Axialbohrung | 35 | | 68 | |
| 3 | Werkzeug | 36 | | 69 | |
| 4 | Schräge | 37 | | 70 | |
| 5 | Queranschlag | 38 | | 71 | |
| 6 | Hülse | 39 | | 72 | |
| 7 | Drehelement | 40 | | 73 | |
| 8 | Mantel | 41 | | 74 | |
| 9 | Stelle | 42 | | 75 | |
| 10 | Innenfläche | 43 | | 76 | |
| 11 | Aufnahme | 44 | | 77 | |
| 12 | Ausnehmung | 45 | | 78 | |
| 13 | Aussenkontur | 46 | | 79 | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Bearbeiten von Werkstücken mit einem Werkzeug (3, 3.1), das mit einem Halter (1) über eine Spanneinrichtung verbunden ist, wobei dem Halter (1) eine deformierbare Hülse (6) zugeordnet ist,
**dadurch gekennzeichnet,**
**dass** die Hülse unrund ist und das Werkzeug (3) aufnimmt oder in eine Ausnehmung (12) in dem Werkzeug (3.1) eingreift, wobei der Hülse (6) ein Drehelement (7, 7.1) mit einer innen- bzw. Aussenkontur ähnlich einer unrunden bussen- bzw. Innenkontur der Hülse (6) auf die Hülse (6) aufgesetzt bzw. in die Hülse (6) eingesetzt und gedreht wird, wobei die Hülse (6) beim Verdrehen des Drehelementes (7, 7.1) so verformt wird, dass das Werkzeug (3) in Radialrichtung festgelegt wird.

2. Vorrichtung nach Anspruch **dadurch gekennzeichnet, dass** die Hülse (6) aus Metall besteht.

3. Vorrichtung nach Anspruch 1 oder 2, **dadurch gekennzeichnet, dass** die Hülse (6) direkt dem Halter (1) abgeformt ist.

4. Vorrichtung nach einem der Ansprüche 1 bits 3, **dadurch gekennzeichnet, dass** die Hülse (6) querschnittlich mehreckig mit stark abgerundeten Ecken ausgebildet ist.

5. Vorrichtung nach wenigstens einem der Anspruche 1 bis 4, **dadurch gekennzeichnet, dass** die Hülse (6) in einer Aufnahme (11) des Drehelementes (7) sitzt, wobei die Aufnahme (11) die Innenkontur aufweist, die im wesentlichen der Aussenkontur der Hülse (6) entspricht.

6. Vorrichtung nach wenigstens einem der Ansprüche 1 bis 5, **dadurch gekennzeichnet, dass** die Hülse (6) in der Ausnehmung (12) des Werkzeuges (3.1) sitzt.

7. Vorrichtung nach Anspruch 6, **dadurch gekennzeichnet, dass** die Ausnehmung (12) des Werkzeuges (3.1) rund ausgestaltet ist.

8. Vorrichtung nach Anspruch 6 oder 7, **dadurch gekennzeichnet, dass** in die Hülse (6) das Drehelement (7.1) einsetzbar ist, wobei die Aussenkontur des Drehelementes (7.1) der Innenkontur der Hülse (6) des Halters (1) entspricht.

9. Vorrichtung nach wenigstens einem der Ansprüche 1 bis 5, **dadurch gekennzeichnet, dass** das Werkzeug (3) in eine Axialbohrung (2) eingesetzt ist und dort mit einer Verdrehsicherung (5) und/oder Lageorientierung in Wirkverbindung steht.

10. Vorrichtung nach Anspruch 9, **dadurch gekennzeichnet, dass** die Verdrehsicherung ein Queranschlag (5) ist, an welchem eine Schräge (4) des Werkzeuges (3) anliegt.

## Claims

1. Device for machining workpieces with a tool (3, 3.1) that is connected by a clamping device to a holder (1), wherein with the holder (1) there is associated a deformable sleeve (6),
**characterized in**
**that** the sleeve is non-circular and receives the tool (3) or engages into a recess (12) in the tool (3.1), wherein the sleeve (6) [sic] a rotary element (7, 7.1) having an internal or external contour similar to a non-circular external or internal contour of the sleeve (6) is mounted onto the sleeve (6) or inserted into the sleeve (6) and rotated, wherein the sleeve (6) during twisting of the rotary element (7, 7.1) is deformed in such a way that the tool (3) is fixed in radial direction.

2. Device according to claim 1, **characterized in that** the sleeve (6) is made of metal.

3. Device according to claim 1 or 2, **characterized in that** the sleeve (6) is formed directly on the holder (1).

4. Device according to one of claims 1 to 3, **characterized in that** the sleeve (6) in cross section is of a polygonal design with extremely rounded corners.

5. Device according to at least one of claims 1 to 4, **characterized in that** the sleeve (6) is seated in a receiver (11) of the rotary element (7), wherein the receiver (11) has the internal contour that substantially corresponds to the external contour of the sleeve (6).

6. Device according to at least one of claims 1 to 5, **characterized in that** the sleeve (6) is seated in the recess (12) of the tool (3.1).

7. Device according to claim 6, **characterized in that** the recess (12) of the tool (3.1) is of a circular design.

8. Device according to claim 6 or 7, **characterized in that** the rotary element (7.1) is insertable into the sleeve (6), wherein the external contour of the rotary element (7.1) corresponds to the internal contour of the sleeve (6) of the holder (1).

9. Device according to at least one of claims 1 to 5, **characterized in that** the tool (3) is inserted into an axial bore (2) and is in working connection there with an anti-rotation element (5) and/or position orientation device.

10. Device according to claim 9, **characterized in that** the anti-rotation element is a crossfeed stop (5), against which a bevel (4) of the tool (3) lies.

## Revendications

1. Dispositif d'usinage de pièces avec un outil (3, 3.1) qui est assemblé avec un porte-outil (1) par l'intermédiaire d'un dispositif de serrage, au porte-outil (1) étant associé un manchon déformable (6),
**caractérisé par le fait**
**que** le manchon est non rond et reçoit l'outil (3) ou s'engage dans un évidement (12) dans l'outil (3.1), sur le manchon (6) étant placé et tourné un élément rotatif (7, 7.1) à contour intérieur ou extérieur similaire à un contour extérieur ou intérieur non rond du manchon (6) sur le manchon (6) ou dans le manchon (6), le manchon (6) étant, lors de la rotation de l'élément rotatif (7, 7.1), déformé de sorte que l'outil (3) soit fixé dans le sens radial.

2. Dispositif selon la revendication 1, **caractérisé par le fait que** le manchon (6) est réalisé en métal.

3. Dispositif selon la revendication 1 ou 2, **caractérisé par le fait que** le manchon (6) est formé directement sur le porte-outil (1).

4. Dispositif selon l'une des revendications 1 à 3, **caractérisé par le fait que** le manchon (6) est réalisé de section piolygonale à coins fortement arondis.

5. Dispositif selon au moins l'une des revendications 1 à 4, **caractérisé par le fait que** le manchon (6) se trouve dans un dispositif de réception (11) de l'élément rotatif (7), le dispositif de réception (11) présentant le contour intérieur qui correspond sensiblement au contour extérieur du manchon (6).

6. Dispositif selon au moins l'une des revendications 1 à 5, **caractérisé par le fait que** le manchon (6) se trouve dans l'évidement (12) de l'outil (3.1).

7. Dispositif selon la revendication 6, **caractérisé par le fait que** l'évidement (12) de l'outil (3.1) est réalisé rond.

8. Dispositif selon la revendication 6 ou 7, **caractérisé par le fait que** l'élément rotatif (7.1) peut être placé dans le manchon (6), le contour extérieur de l'élément rotatif (7.1) correspondant au contour intérieur du manchon (6) du porte-outil (1).

9. Dispositif selon au moins l'une des revendications 1 à 5, **caractérisé par le fait que** l'outil (3) est placé dans un alésage axial (2) et y communique en fonctionnement avec un dispositif empêchant la rotation (5) et/ou un disositif d'orientation de position.

10. Dispositif selon la revendication 9, **caractérisé par le fait que** le dispositif empêchant la rotation est une butée transversale (5) contre laquelle s'appuie une face oblique (4) de l'outil (3).
